# EUROPÄISCHE PATENTANMELDUNG

(11) **EP 2 631 334 A1**
(43) Veröffentlichungstag der Anmeldung: **28.08.2013**
(21) Anmeldenummer: 12001241.4
(22) Anmeldetag: 24.02.2012
(51) Int. Cl.: C25B 9/02

(54) **Elektrolysezelle, insbesondere zur Verwendung in einer Anlage zur Erzeugung einer elektrochemisch aktivierten Kochsalzlösung, sowie Anlage mit einer Anzahl derartiger Elektrolysezellen**

(71) Anmelder: Caliopa AG, 6340 Baar (CH)
(72) Erfinder: Mathé, Hans-Georg, 6330 Cham (CH)
(74) Vertreter: Walkenhorst, Andreas

(57) **Zusammenfassung**

Eine Elektrolysezelle, insbesondere zur Erzeugung einer elektrochemisch aktivierten Kochsalzlösung, mit einem mit einer Anode versehenen Anodenraum (44) und mit einem von diesem durch eine Membran (46) getrennten, mit einer Kathode versehenen Kathodenraum (42), wobei die Membran (46) als von einem Außengehäuse (84) umgebener Keramik-Hohlzylinder (80) ausgeführt ist, soll die Herstellung einer besonders hochwertigen elektrochemisch aktivierten Kochsalzlösung auf besonders günstige und zuverlässige Weise ermöglichen. Dazu sind erfindungsgemäß der die Membran (46) bildende Keramik-Hohlzylinder (80) und das diesen umgebende Außengehäuse (84) endseitig jeweils in einer Abschlusskappe gelagert, die eine einen Zutrittskanal zum Innenraum des die Membran (46) bildenden Keramik-Hohlzylinders (80) bildende Zentralbohrung (110) und einen diese umlaufenden, medienseitig mit dem Zwischenraum zwischen Membran (46) und Außengehäuse (84) verbundenen Ringraum (112) aufweist.

## Beschreibung

Die Erfindung betrifft eine Elektrolysezelle, insbesondere zur Erzeugung einer elektrochemisch aktivierten Kochsalzlösung, mit einem mit einer Anode versehenen Anodenraum und mit einem von diesem durch eine Membran getrennten, mit einer Kathode versehenen Kathodenraum, wobei die Membran als von einem Außengehäuse umgebener Keramik-Hohlzyünder ausgeführt ist. Sie bezieht sich weiter auf eine Anlage zur Erzeugung einer elektrochemisch aktivierten Lösung mit einem eine Mehrzahl von derartigen Elektrolysezellen aufweisenden Elektrolysemodul.

Elektrolysevorrichtungen oder -anlagen zur Erzeugung einer elektrochemisch aktivierten Lösung durch Elektrolyse von solehaltigern Wasser, bei denen eine oder mehrere Elektrolysezellen mit einem Anodenraum und einem Kathodenraum, die durch eine Membran voneinander getrennt sind, zum Einsatz kommen, sind aus einer Vielzahl von Dokumenten, beispielsweise aus der DE 30 003131 A1, aus der US 4,056,452, aus der EP 1 728 768 A1 oder aus der europäischen Patentanmeldung Nr. 10 003 555.9-2104 bekannt. In derartigen Anlagen wird zur Erzeugung der elektrochemisch aktivierten Salzlösung durch Elektrolyse ein mit einer Kochsalzlösung oder mit Sole beaufschlagter Wasserstrom der Elektrolysevorrichtung zugeführt und dort elektrolytisch zersetzt. Dadurch wird eine elektrochemisch aktivierte wässrige Salzlösung erhalten, die einen vergleichsweise hohen Gehalt an freiem Chlor und ein vergleichsweise hohes Redox-Potential aufweist. Die dabei erhältliche elektrochemisch aktivierte Salzlösung ist besonders günstig als Desinfektionsmittel, beispielsweise zur Entkeimung von Wasser und/oder wässrigen Lösungen, nutzbar.

Bei der Herstellung der elektrochemisch aktivierten Salzlösung auf die genannte Weise wird üblicherweise eine besonders hohe Wirksamkeit oder Biozidität der hergestellten Substanz, üblicherweise charakterisiert durch einen besonders hohen Gehalt an freiem Chlor und/oder ein angemessen hohes Redox-Potential, angestrebt. Zudem ist gerade im Hinblick auf mögliche Anwendungen derartiger Substanzen als Desinfektionsmittel oder auch als Zusatz-, Träger- oder sogar Wirkstoff in medizinischen oder therapeutischen Präparaten wünschenswert, dass die hohe Wirksamkeit gerade im Hinblick auf eine besonders gute Lagerbeständigkeit auch nach vergleichsweise langer Lagerung von beispielsweise mehr als einem Jahr nahezu unverändert oder mit nur geringfügigen Veränderungen aufrechterhalten bleiben soll. Ein weiterer wichtiger Kennwert für die Charakterislerung der auf die genannte Weise erhältlichen elektrochemisch aktivierten Salzlösung ist deren pH-Wert, der die Kompatibilität oder Vereinbarkeit mit anderen chemischen Substanzen oder Wirkstoffen und auch die Verwendbarkeit der elektrochemisch aktivierten Salzlösungen in verschiedenen Umgebungsbedingungen und dergleichen wesentlich mitbestimmt.

Bei der Herstellung von elektrochemisch aktivierten Salzlösungen der genannten Art durch Elektrolyse besteht somit allgemein das Bestreben, bei hoher Lagerbeständigkeit eine besonders hohe bakteriozide oder antibakterielle Wirkung, charakterisiert durch einen hohen Gehalt an freiem Chlor, zu gewährleisten, wobei der pH-Wert möglichst eine gute Vereinbarkeit mit anderen Substanzen oder Wirkstoffen erlauben oder sogar in der Art eines freien Parameters unabhängig von den anderen genannten Parametern einstellbar gehalten werden sollte.

Wie sich herausgestellt hat, ist das Erreichen dieser Auslegungsziele von einer großen Vielzahl von Parametern, beispielsweise bei der Verfahrensführung, bei der Herstellung der elektrochemisch aktivierten Lösung, bei der Auslegung der hierzu verwendeten Anlagen und auch bei der grundsätzlichen Konzeption des Herstellungsprozesses, beispielsweise im Hinblick auf die Medienstromführung, abhängig. Unter all diesen Aspekten und Parametern ist auch die Auslegung der auch als Reaktor bezeichneten einzelnen Elektrolysezellen und in diesem Zusammenhang insbesondere auch deren konstruktive Ausgestaltung bedeutsam.

Hinsichtlich der Auslegung und des geometrischen Aufbaus der einzelnen, auch als "Reaktor" bezeichneten Elektrolysezellen hat sich ein so genannter röhrenförmiger oder stabförmiger Aufbau besonders bewährt, bei dem die Membran als von einem Außengehäuse umgebener Keramik-Hohlkörper ausgestaltet ist. Bei einem derartigen rohrförmigen Aufbau des Reaktors oder der Elektrolysezellen befindet sich eine erste Elektrode im Innenraum des Keramik-Hohlzylinders, wohingegen die andere Elektrode im Ringraum zwischen dem Keramik-Hohlzylinder und dem Außengehäuse angeordnet ist oder vom Außengehäuse selbst gebildet wird. Bei einem derartigen Aufbau des Reaktors oder der Elektrolysezelle erfolgt somit die für die Elektrolyse der solehaltigen Wasserlösung erforderliche Ionen- und Elektronenwanderung und der Ionenaustausch über den als Membran vorgesehenen Keramik-Hohlzylinder hinweg von dessen Innen-, in den ihn umgebenden Außenraum oder umgekehrt. Eine Elektrolysezelle zur Verwendung in einer Anlage zur Erzeugung einer elektrochemisch aktivierten Kochsalzlösung mit diesem rohrförmigen Aufbau der eingangs genannten Art ist aus der nicht vorveröffentlichten europäischen Patentanmeldung Nr. 10 014 854.3-1213 bekannt.

Der Erfindung liegt die Aufgabe zu Grunde, eine Elektrolysezelle der oben genannten Art anzugeben, mit der die Herstellung einer im Sinne der genannten Auslegungsziele besonders hochwertigen elektrochemisch aktivierten Kochsalzlösung auf besonders günstige und zuverlässige Weise möglich ist, und die zur Verwendung in einer hierfür bestimmten Anlage besonders geeignet ist. Des Weiteren soll eine Anlage zur Erzeugung einer elektrochemisch aktivierten Kochsalzlösung, insbesondere unter Verwendung einer Anzahl derartiger Elektrolysezellen, angegeben werden, mit der die Herstellung von im Sinne der genannten Auslegungsziele besonders hochwertiger Kochsalzlösung ermöglicht ist.

Bezüglich der Elektrolysezelle wird diese Aufgabe erfindungsgemäß dadurch gelöst, dass der die Membran bildende Keramik-Hohlzylinder und das diesen umgebende Außengehäuse endseitig jeweils in einer Abschlusskappe gelagert sind, die eine einen Zutrittskanal zum Innenraum des die Membran bildenden Keramik-Hohlzylinders bildende Zentralbohrung und einen diese umlaufenden, medienseitig mit dem Zwischenraum zwischen Membran und Außengehäuse verbundenen Ringraum aufweist.

Die Erfindung geht von der Erkenntnis aus, dass die Erfüllung der verschiedenartigen genannten Auslegungsziele zur Bereitstellung einer in diesem Sinne besonders hochwertigen aktivierten Kochsalzlösung in erheblichem Maße von einer hochgenauen und präzisen Medienstrom- und Materialführung abzuhängen scheint. Um dies zu ermöglichen, sollte die Elektrolysezelle für eine reproduzierbare und zuverlässig kontrollierbare Verfahrensführung ausgelegt sein, die in besonders hohem Maße bei konstant gehaltenen Verfahrensparametern wie beispielsweise Durchflussrate, Temperatur, angelegte Aktivierungsspannung und dergleichen zuverlässig reproduzierbare mikroskopische Auswirkungen auf die lonenwanderung und die entsprechende Umsetzung in den Medienströmen zeigt. Um dies zu ermöglichen, sollte die Elektrolysezelle hinsichtlich ihrer baulichen und konstruktiven Auslegung für ein besonders homogenes und gleichmäßiges Strömungsprofil in Anoden- und Kathodenkammer ausgelegt sein, bei dem der Mediendurchfluss weitgehend frei von Störeinflüssen, statistischen Beeinträchtigungen und dergleichen gehalten werden kann. Um dies gerade bei der vorgesehenen rohrförmigen Bauweise der Elektrolysekammer zu gewährleisten, ist gerade für den Außenbereich des Keramik-Hohlzylinders, also den als Elektrodenkammer vorgesehenen Ringraum zwischen Keramik-Hohlzylinder und dem diesen umgebenden Außengehäuse, eine in Umfangsrichtung gesehen möglichst gleichförmig Ein- und Ausspeisung des Strömungsmediums vorgesehen, bei der ein- und ausspeisungsbedingte Verwirbelungen besonders gering gehalten werden sollen.

Dies wird erreicht, indem dem genannten Ringraum zwischen Membran und Außengehäuse eingangs- und vorzugsweise auch ausgangsseitig jeweils ein ringförmiger Sammelraum zugeordnet ist, in den das Medium zunächst eingespeist bzw. von dem das Medium nach Durchlaufen des Ringraums wieder abgeführt werden kann. In diesem Sammelraum ist eine Homogenisierung und Durchmischung des über zugeordnete Eintrittsöffnungen eingespeisten Mediums vorgesehen, bevor dieses über einen umlaufenden Ringspalt in den Ringraum zwischen Membran-Hohlzylinder und Außengehäuse eintritt (bzw. analog auf der Austrittsseite). Verwirbelungen, die durch die Einspeisung von Medium über Eintrittsöffnungen auftreten könnten und die Homogenität des Durchflusses gerade in Umfangsrichtung gesehen stören könnten, werden somit konsequent vom eigentlichen, durch den Ringraum zwischen Membran und Außengehäuse gebildeten Elektrodenraum weg und in den vorgelagerten Sammelraum hineinverlagert. Umgebungseinflüsse wie beispielsweise einspeisebedingte Verwirbelungen können damit konsequent vom eigentlichen Elektrodenraum ferngehalten werden.

Der Ein- bzw. Austritt des Mediums oder Elektrolyten in den Ringraum zwischen Membran und Außengehäuse erfolgt somit über den umlaufenden Ringspalt und damit unter Vermeidung punktueller Überströmung, wie es beispielsweise bei Verbindungs- oder Überströmlöchern der Fall wäre. Besonders bevorzugt ist dabei der Ringspalt vergleichsweise eng dimensioniert, so dass sich geometriebedingt eine vergleichsweise hohe Fließgeschwindigkeit des Mediums beim Durchströmen des Ringspalts ergibt. Durch diese lokale Überhöhung der Fließgeschwindigkeit erfolgt eine zusätzliche Homogenisierung und Vergleichmäßigung des Strömungsprofils.

Vorzugsweise ist das die Membran umgebende Außengehäuse ebenfalls als Hohlzylinder, besonders bevorzugt gebildet aus Metall, ausgestaltet. Damit ergibt sich eine insgesamt gesehen rohrförmige Auslegung der Elektrolysezelle, wobei In besonders vorteilhafter Ausgestaltung der das Außengehäuse bildende Hohlzylinder konzentrisch zum die Membran bildenden Hohlzylinder angeordnet ist.

Innerhalb des die Membran bildenden Hohlzylinders ist zur Bildung der dort vorgesehenen Elektrode ein weiterer Metallkörper angeordnet. Dieser ist vorzugsweise als ebenfalls als Hohlzylinder ausgeführte metallische Zentralelektrode ausgeführt, wobei deren Innenraum über eine Anzahl von Überströmöffnungen medienseitig mit dem sie außenseitig umgebenden, von der Innenseite der Membran begrenzten Ringraum verbunden ist. Für die Innenseite des die Membran bildenden Hohlzylinders ist somit eine Einspeisung des zu behandelnden Medienstroms in der Art einer zentralen Anordnung zunächst in den Innenraum dieser Zentralelektrode ermöglicht, wobei die Überführung des Mediums in den eigentlichen Elektrodenraum, also den Ringraum zwischen Zentralelektrode einerseits und Membran andererseits, über die Überströmöffnungen erfolgt.

Die Zentralelektrode ist dabei bevorzugt ebenfalls konzentrisch zur Membran angeordnet. Gerade in Kombination mit dem Außengehäuse ergibt sich somit eine insgesamt konzentrische und damit rotationssymmetrische Bauweise des Gesamtsystems aus Zentralelektrode, Membran und Außengehäuse, wobei die eigentlichen Elektrodenräume einerseits durch den Ringraum zwischen Zentralelektrode und Membran und andererseits durch den Ringraum zwischen Membran und Außengehäuse gebildet werden. Symmetriebedingt ist durch diese Ausgestaltung der Elektrodenräume als konzentrisch zueinander positionierte Ringräume eine besonders homogene Medienstromführung beidseitig der Membran erreichbar.

Um gerade bei dieser Auslegung eine besonders homogene und störungsfreie Medienstromführung in den eigentlichen Elektrodenräumen zu gewährleisten, sind die in der Zentralelektrode vorgesehenen Überströmöffnurigen vorzugsweise konsequent ausschließlich im Endbereich der Zentralelektrode, also in unmittelbarer Nähe zur endseitig jeweils vorgesehenen Abschlusskappe, angeordnet. In besonders vorteilhafter Ausgestaltung sind sämtliche Überströmöffnungen der Zentralelektrode dabei in Längsrichtung der Anordnung gesehen höchstens 10 mm, besonders bevorzugt höchstens 5 mm, von der Kontaktstelle des die Membran bildenden Keramik-Hohlzylinders mit der jeweiligen Abschlusskappe angeordnet. Insbesondere sind die Überströmöffnungen dabei vorteilhafterweise im Wesentlichen innerhalb der von der Stirnfläche der Abschlusskappe gebildeten Ebene positioniert. Durch diese Bauweise ist insbesondere erreicht, dass die "wirksame Länge", über die die Medienströme beim Durchströmen der Elektrodenräume der elektrolytischen Aktivierung ausgesetzt sind, sowohl für den Elektrodenraum innenseitig des die Membran bildenden keramischen Hohlzylinders als auch im außenseitig dieses Hohlzylinders angeordneten Elektrodenraum gleich ist. Beidseitig der Membran ist somit ein insbesondere in Umfangsrichtung gesehen homogenes Strömungsprofil in den Elektrodenräumen gewährleistet, wobei beide Elektrodenräume hinsichtlich des Strömungsprofils des Mediums eine gemeinsame Stimebene aufweisen.

Die Zentralelektrode ist in weiterer vorteilhafter Ausgestaltung endseitig jeweils mit einem in ihren Innenraum hineinragenden, eine Anzahl von Überströmöffnungen aufweisenden Ein- bzw. Ausströmelement versehen, wobei in besonders bevorzugter Ausgestaltung die Überströmöffnungen der Ein- bzw. Ausströmelemente in Längsrichtung der Membran gesehen an gleicher Position angeordnet sind wie die Überströmöffnungen der Zentraletektrode. Durch diese Anordnung oder Positionierung der einzelnen Komponenten zueinander ist erreicht, dass die Medienzufuhr von extern (bzw. auslassseitig die Medienabfuhr) über das Ein- bzw. Ausströmelement und dessen Überströmöffnungen in den Innenraum der Zentralelektrode erfolgen kann, wobei in gleicher Position in Längsrichtung der Membran gesehen der Weitertransport von Medium aus dem Innenbereich der Zentralelektrode über deren Überströmöffnungen in den die Zentralelektrode außenseitig umgebenden, als Elektrodenraum dienenden Ringraum erfolgen kann.

Gerade in Kombination mit den für den Medienein- bzw. -austritt in den äußeren, ringförmigen Elektrodenraum jeweils vorgesehenen Ringspalten sind die Überströmöffnungen dabei vorzugsweise hinsichtlich Anzahl, Positionierung und Größe derart gewählt und ausgeführt, dass ein insgesamt besonders gleichmäßiges und homogenes Strömungsprofil entsteht.

In besonders vorteilhafter Ausgestaltung, der auch eigenständige erfinderische Bedeutung zukommt, ist das System für eine Drallerzeugung im die jeweils ringförmig ausgestalteten Elektrodenräume durchströmenden Medium vorgesehen. Mit anderen Worten: vorteilhafterweise ist das System derart ausgelegt, dass der Elektrolyt die Elektrodenräume vornehmlich in Längsrichtung der Membran gesehen durchströmt, wobei dieser Strömungsrichtung ein Drall im Medienstrom überlagert ist. Dieser Drall kann innenseitig der Membran, außenseitig der Membran oder in beiden Elektrodenräumen vorgesehen sein. Hierdurch wird erreicht, dass das die Elektrodenräume durchströmende Medium bedingt durch die auftretenden Zentrifugalkräfte zusätzlich an die jeweiligen Außenwände des Elektrodenraums, also für den inneren Ringraum an die Innenwand der Membran bzw. für den äußeren Ringraum an die Innenwand des Außengehäuses, angepresst wird. Damit entsteht ein besonders inniger Kontakt des Mediums an der jeweiligen Wand, so dass die diesbezüglichen Transportprozesse zusätzlich unterstützt werden.

Gerade bei der besonders bevorzugten Anordnung der Anode im Zentralbereich ist durch eine derartige Drallerzeugung eine zusätzliche Begünstigung der Ionenwanderungsprozesse erreichbar, indem die erzeugten Na⁺-Ionen zusätzlich an die Membran gepresst werden, so dass sich das elektrolysebedingt erzeugte Ungleichgewicht zwischen Na⁺- und Cl⁻ - Ionen noch weiter erhöht. Im Außenbereich, d. h. im äußeren, die Membran ringförmig umgebenden Kathodenraum, bewirkt der Drall hingegen, dass das Wasser verstärkt in innigen Kontakt mit der Kathode gebracht wird, so dass die H₂-Bildung und anschließend auch die Entgasung verstärkt wird. Beide Effekte in Kombination miteinander begünstigen In besonderem Maße die Produktion von NaOH.

Die Abschlusskappen sind einerseits, gerade durch den genannten umlaufenden Ringraum, zur Homogenisierung, Sammlung und Vorverteilung der Strömungsmedien vorgesehen. Andererseits sind die Abschlusskappen aber auch in besonders bevorzugter Ausgestaltung als Trägerelemente und zudem als Isolationselemente vorgesehen, über die eine ordnungsgemäße Positionierung der Komponenten, also insbesondere Zentralelektrode, Membran und/oder Außengehäuse, relativ zueinander und eine gleichzeitige zuverlässige elektrische Isolierung dieser Komponenten voneinander erfolgen kann. Dazu sind die Abschlusskappen vorzugsweise aus Isolatormaterial, besonders bevorzugt aus Kunststoff, insbesondere aus Polypropylen (PP), Polyethylen (PE) oder insbesondere aus Polytetrafluorethylen (PTFE), gefertigt.

In der Art einer herkömmlichen Bauweise könnte die Elektrolysezelle derart ausgestaltet sein, dass der von der Zentralelektrode begrenzte innere Raum der Membran als Anodenraum und der vom Außengehäuse begrenzte, bzgl. der Membran äußere Ringraum als Kathodenraum vorgesehen ist. Vorteilhafterweise ist aber die Zentralelektrode als Kathode und das die Membran umgebende Außengehäuse als Anode ausgestaltet. Hierdurch ist insbesondere erreichbar, dass der die Membran außenseitig umlaufende Ringraum, also der Anodenraum, eine vergleichsweise größere Querschnittsfläche für die Durchströmung des Mediums aufweist, so dass gerade anodenseitig ein besonders störungsfreier Mediendurchsatz erreichbar ist.

Um die bei der Elektrolyse ablaufenden elektrochemischen Prozesse, insbesondere bzgl. der angestrebten Ionenwanderung und deren Umsetzung in die elektrochemische Aktivierung der Kochsalzlösung, zu begünstigen, ist die Anode in vorteilhafter Ausgestaltung mit einer Oberflächenbeschichtung versehen. Die Oberflächenbeschichtung Ist dabei hinsichtlich der Materialwahl besonders bevorzugt in der Art einer katalytischen Begünstigung der Reaktionen gezielt auf die vorgesehenen Prozesse ausgerichtet. Vorzugsweise umfasst die Oberflächenbeschichtung daher die MaterialienPlatin und/oder Iridium und/oder Ruthenium und/oder Gold und/oder Diamant. Insbesondere Iridium und/oder Ruthenium können dabei in geeigneter Form, beispielsweise jeweils als Oxid oder Mischoxid, vorliegen. Gerade der Beschichtungsbestandteil Rutheniumoxid begünstigt dabei als Katalysator eine besonders hohe Produktionsrate an Sauerstoff-abspaltenden Substanzen, insbesondere gemessen in freiem Chlor, und kann diesbezüglich in geeigneter Menge als Bestandteil der Beschichtung vorgesehen sein. In alternativer oder zusätzlicher vorteilhafter Ausgestaltung ist auch die Kathode mit einer die elektrochemischen Prozesse begünstigenden Oberflächenbeschichtung versehen, besonders bevorzugt aus Gold (Au). Vorteilhafterweise beträgt die Schichtdicke der Au-Beschichtung etwa 1 µm.

In einer weiteren besonders bevorzugten Ausführungsform, der ebenfalls eigenständige erfinderische Bedeutung zukommt, ist der die Membran bildende Keramik-Hohlzylinder hinsichtlich seiner Materialwahl und seiner Materialeigenschaften gezielt auf die bei der Elektrolyse ablaufenden Ionenwanderungsprozesse abgestimmt und ausgerichtet. Dazu weist der die Membran bildende Hohlzylinder besonders bevorzugt einen Trägerkörper aus poröser Keramik mit einer mittleren Porengröße von mindestens 500 nm, bevorzugt von etwa 3 µm, auf. In weiterer vorteilhafter Ausgestaltung ist dabei auf mindestens einer der Oberflächen dieses Trägerkörpers eine als Definitionsschicht dienende Beschichtung mit einer mittleren Porengröße von höchstens 150 nm, bevorzugt von etwa 100 nm, vorgesehen. Vorteilhafterweise ist dabei als Material für den Trägerkörper α - Al₂O₃ mit einer Porengröße von etwa 3 µm und für die Definitionsschicht Titandioxid (TiO₂) mit einer Porengröße von etwa 5 bis 10 nm oder α - Al₂O₃ mit einer Porengröße von etwa 100 nm vorgesehen.

Durch diese bzgl. der Verwendung in einer Elektrolysezelle eigenständig erfinderische Kombination eines vergleichsweise großporigen Trägerkörpers mit einer vergleichsweise kleinporigen Definitionsschicht ist eine grundsätzlich gute Materialdurchlässigkeit des Hohlzylinders gegeben, so dass die Ionenwanderungsprozesse über die Membran hinweg besonders erleichtert sind. Die Definitionsschicht stellt dabei sicher, dass im Wesentlichen die hinsichtlich ihrer Größe selektiv ausgewählten erwünschten Ionen wandern können, wobei unerwünschte Neben- oder Beiprodukte herausgefiltert werden können. In weiterer vorteilhafter Ausgestaltung weist die Definitionsbeschichtung dabei eine mittlere Porengröße von mindestens 0,2 nm oder 200 pm auf.

Vorteilhafterweise ist die Definitionsschicht dabei auf der der Anodenseite der Membran zugewandten Oberfläche des Trägerkörpers, also bei der bevorzugt vorgesehenen Bauweise mit innen vorgesehenem Anoden- und außen vorgesehenem Kathodenraum innenseitig, angebracht.

Bezüglich der Anlage zur Erzeugung einer elektrochemisch aktivierten Kochsalzlösung auf Wasserbasis wird die genannte Aufgabe gelöst mit einem Elektrolysemodul, das eine Mehrzahl von Elektrolysezellen der genannten Art umfasst, wobei die Anodenräume der Elektrolysezellen medienseitig in Reihe und die Kathodenräume der Elektrolysezellen medienseitig parallel geschaltet sind. Gerade durch die Verwendung der Elektrolysezellen der genannten Art in einer Anlage, bei der durch diese Medienstromführung eine gezielte sequentielle Anreicherung von Ionen im Anolyten gewährleistet ist, ist eine im Sinne der genannten Auslegungsziele besonders hochwertige elektrochemisch aktivierte Lösung herstellbar.

Besonders bevorzugt sind dabei die Anoden In den Anodenräumen jeweils mit einer Oberflächenbeschichtung versehen, wobei Material und Zusammensetzung der Oberflächenbeschichtung abhängig von der Position der jeweiligen Anode in der Serienschaltung der Anodenräume gewählt sind. Dadurch kann in besonders vorteilhafter Ausgestaltung bedarfsgerecht jede Anode mit einer spezifisch auf die Anforderungen innerhalb der Serienschaltung ausgerichteten katalytisch aktiven Beschichtung versehen sein, so dass abhängig von der Strömungsführung innerhalb der Serienschaltung beispielsweise gezielt eine erhöhte Produktionsrate an freien Radikalen, an abgespaltenem Sauerstoff oder dergleichen eingestellt werden kann.

Die mit der Erfindung erzielten Vorteile bestehen insbesondere darin, dass durch die medienstromseitig gesehen eingangsseitige vor- und ausgangsseitige Nachschaltung des in die Abschlusskappen integrierten ringförmigen Sammelraums sowohl eingangs- als auch ausgangsseitig der Medienein- bzw. -austritt in den die Membran außenseitig umgebenden ringförmigen Elektrodenraum besonders homogen, verwirbelungsfrei und in Umfangsrichtung gesehen gleichförmig erfolgen kann. Damit können die empfindlichen Elektrolysevorgänge möglicherweise unerwünscht beeinflussende Störfaktoren wie Verwirbelungseffekte, Bildung von Gasbläschen oder dergleichen konsequent vermieden oder zumindest besonders gering gehalten werden. Gerade im Hinblick auf die vergleichsweise sensible Abhängigkeit der Stoffeigenschaften der hergestellten elektrochemisch aktivierten Lösung von verschiedenartigen Prozessparametem ist damit eine zuverlässige, reproduzierbare und qualitativ hochwertige Einstellung der gewünschten Stoffeigenschaften ermöglicht.

Ein Ausführungsbeispiel der Erfindung wird anhand einer Zeichnung näher erläutert. Darin zeigen:
- FIG. 1: eine Anlage zur Erzeugung einer elektrochemisch aktivierten Salzlösung durch Elektrolyse,
- FIG. 2: in perspektivischer Ansicht eine Elektrolysezelle zur Verwendung in der Anlage gemäß FIG. 1,
- FIG. 3: die Elektrolysezelle gemäß FIG. 2 in Draufsicht,
- FIG. 4, 5: die Elektrolysezelle gemäß FIG. 2 jeweils im Längsschnitt,
- FIG. 6: einen vergrößerten Ausschnitt aus FIG. 4,
- FIG. 7: in perspektivischer Ansicht eine Abschlusskappe der Elektrolysezelle gemäß FIG. 2,
- FIG. 8: die Abschlusskappe gemäß FIG. 7 im Längsschnitt, und
- FIG: 9: die Abschlusskappe gemäß FIG. 7 im Querschnitt.

Gleiche Teile sind in allen Figuren mit denselben Bezugszeichen versehen.

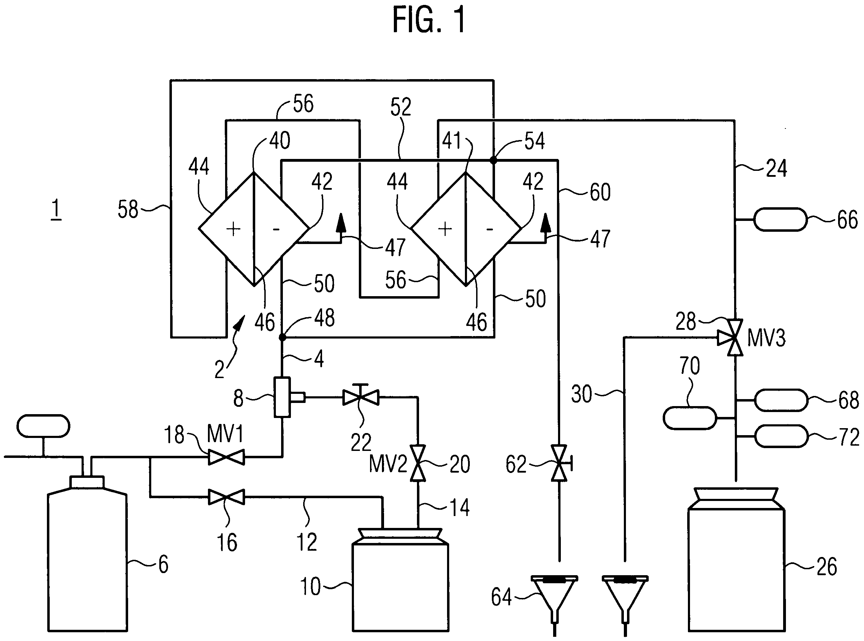

Die Anlage 1 gemäß FIG. 1 ist zur Erzeugung einer elektrochemisch aktivierten Salzlösung durch Elektrolyse vorgesehen. Dazu umfasst die Anlage 1 ein Elektrolysemodul 2, dem eingangsseitig über eine Versorgungsleitung 4 ein Elektrolysemedium zuführbar ist. Als Elektrolysemedium ist dabei mit Sole oder einer wässrigen Salzlösung versetztes enthärtetes oder demineralisiertes Wasser vorgesehen. Dazu ist die Zuströmleitung 4 eingangsseitig mit einer Wasserenthärterstation 6 verbunden. Zur Zudosierung der Sole in das enthärtete Wasser ist in die Zuströmleitung 4 eine Venturidüse 8 geschaltet, die ihrerseits eingangsseitig mit einem Solebehälter 10 verbunden ist. Von der Zuführungsleitung 4 zweigt zudem nach der Wasserenthärtestation 6 eine Ablaufleitung 12 ab, über die während einer Inbetriebnahmephase der Anlage 1 der Wasserstrom aus der Wasserenthärterstation 6 unter Umgehung des Elektrolysemoduls 2 der nachfolgenden Komponenten in den Solebehälter 10 abführbar ist. Zur Umschaltung zwischen diesen Betriebszuständen mit dem Dauerbetriebszustand sowie zur dosierten Einspeisung einer vorgebbaren Solemenge in das Elektrolysemedium sind in die Zuführleitung 4, die Ablaufleitung 12 sowie die in die Venturidüse 8 mündende Soleeinspeiseleitung 14 geeignete Ventile 16, 18, 20 und zusätzlich in die Einspeiseleitung 14 ein Drosselventil 20 geschaltet.

Ausgangsseitig, zur Abführung der im Elektrolysemodul 2 hergestellten elektrochemisch aktivierten Salzlösung, ist an das Elektrolysemodul 2 eine Abströmleitung 24 angeschlossen, die ausgangsseitig in einen Vorratsbehälter 26 für die hergestellte Salzlösung oder den Anolyten mündet. Zur vorübergehenden Umgehung des Vorratsbehälters 26 während der Inbetriebnahmephase der Anlage 1 ist in die Ablaufleitung 24 zudem ein Multiwegeventil 28 geschaltet, dessen zweiter Ausgang an eine Abflussleitung 30 angeschlossen ist.

Die Anlage 1 ist zur Herstellung einer elektrochemisch aktivierten Salzlösung mit gerade zur Verwendung als Desinfektionsmittel oder antibakteriellem Wirkstoff in beispielsweise medizinischen oder pharmazeutischen Anwendungen besonders günstigen Eigenschaften, insbesondere mit einem besonders hohen Gehalt an freiem Chlor von vorzugsweise mehr als 500 mg/l und insbesondere etwa 800 mg/l, gegebenenfalls aber auch sogar mehr als 2.000 mg/l bei hoher Lagerfähigkeit, ausgelegt. Um dies zu ermöglichen, ist das Elektrolysemodul 2 mehrkomponentig aufgebaut und umfasst eine Mehrzahl von Elektrolysezellen 40, 41, von denen im Ausführungsbeispiel lediglich zwei dargestellt sind; selbstverständlich können analog zu den folgenden Ausführungen aber auch noch weitere Elektrolysezellen 40, 41 vorgesehen sein.

Jede Elektrolysezelle 40, 41 umfasst jeweils einen einen ersten Elektrodenraum bildenden Kathodenraum 42 und einen einen zweiten Elektrodenraum bildenden Anodenraum 44, die jeweils durch eine Membran 46 voneinander getrennt sind. Das Anlegen einer elektrischen Spannung zwischen einer den jeweiligen Anodenraum 44 begrenzenden Anode einerseits und einen den jeweiligen Kathodenraum 42 begrenzenden Kathode andererseits bewirkt sodann eine Ionenwanderung über die zwischen liegende Membran 46 hinweg, so dass eine zumindest teilweise Dissoziation des im Elektrolysemedium enthaltenen Wassers sowie eine zumindest teilweise Dissoziation der In Form von Sole mitgeführten Salzanteile und deren Elektrolyse-Derivate auftritt. Auf Grund der elektrischen Ladung der Ionen in diesen Materialien führt dieser Ionenwanderungsprozess in Folge der angelegten elektrischen Spannung zu einer Anreicherung von Cl⁻ und OH- im jeweiligen Anodenraum 44 und zu einer Anreicherung von H⁺ und Na⁺ im jeweiligen Kathodenraum 42. Zur bedarfsweisen Abführung von demzufolge im jeweiligen Kathodenraum 42 oder ersten Elektrodenraum angereichertem Wasserstoffgas ist der Kathodenraum 42 jeweils mit einer Entgasungsleitung 47 verbunden. Diese bildet, gegebenenfalls in Kombination mit im Kathodenraum 42 angeordneten Mitteln zur Bläschenerzeugung oder Gasabscheidung wie beispielsweise Verwirbler oder dergleichen, ein Entgasungsmodul für den jeweiligen Kathodenraum 42.

Die gewünschten, qualitativ hochwertigen Eigenschaften der elektrochemisch aktivierten Salzlösung werden In der Anlage 1 insbesondere durch eine spezifische Führung der Medienströme Im Elektrolysemodul 2 erreicht. Dabei ist in der Anlage 1 gemäß dem Ausführungsbeispiel, die gezielt auf die Bereitstellung von elektrochemisch hochgradig aktiviertem Anolyt ausgerichtet ist, eine kathodenseitig im Wesentlichen parallele Medienstromführung mit einer anodenseitig im Wesentlichen seriellen Medienstromführung kombiniert. Alternativ oder bei abweichendem Auslegungsziel kann auch eine anodenseitig im Wesentlichen parallele mit einer kathodenseitig im Wesentlichen seriellen Medienstromführung kombiniert sein. Darüber hinaus können auch noch weiterführende Kombinationen dieser medienseitigen Verschaltungen vorgesehen sein.

Im Einzelnen ist dabei in der Anlage 1 im Ausführungsbeispiel in der Zuströmleitung 4 ein Verzweigungspunkt 48 vorgesehen, von dem aus in der Art einer parallelen Medienzuführung in die Kathodenräume 42 der Elektrolysezellen 40, 41 mündende Zuleitungen 50 abgehen. Ausgangsseitig der Kathodenräume 42 sind Abströmleitungen 52 vorgesehen, die in einem Sammelpunkt 54 zusammengeführt sind, so dass sich insgesamt eine medienseitig parallele Verschaltung der Kathodenräume 42 ergibt.

Anodenseitig ist hingegen eine Reihen- oder Hintereinanderschaltung der Anodenräume 44 für den Anolyten vorgesehen. Dazu ist der in Strömungsrichtung des Anolyten gesehen dem ersten Elektrolysemodul 40 zugeordnete Anodenraum 44 ausgangsseitig über eine Überströmleitung 56 mit der Eingangsseite des nachfolgenden, im zweiten Elektrolysemodul 41 angeordneten Anodenraums 44 verbunden. Dieser ist seinerseits ausgangsseitig an die Abströmleitung 24 angeschlossen, so dass sich in der Art einer mehrstufigen oder kaskadenartigen Ausführung eine Hintereinanderschaltung der Anodenräume 44 bzgl. des Anolyten ergibt.

Zudem ist in der Anlage 1 vorgesehen, den aus den Kathodenräumen 42 abströmenden Katholyten als Anolyt in die hintereinander geschalteten Anodenräume 44 einzuspeisen. Dazu ist der Sammelpunkt 54 für den Katholyten über eine überströmleitung 58 mit dem Anodenraum 44 der in Strömungsrichtung des Anolyten gesehen ersten Elektrolysezelle 40 verbunden.

Von der Überströmleitung 58 zweigt im Sammelpunkt 54 zudem eine Abführleitung 60 ab, über die ein in seiner Menge über ein Drosselventil 62 einstellbarer Teilstrom des Katholyten einem Abwassersystem oder einem Auffangbehälter 64 zugeführt werden kann. Mit dieser Anordnung ist es möglich, eine einstellbare Teilmenge des aus den Kathodenräumen 42 abströmenden Katholyten als Anolyt der Kaskade aus Anodenräumen 44 zuzuführen. Damit können unter anderem die individuellen Reaktionsparameter wie beispielsweise Druck und Fließgeschwindigkeit in den Anodenräumen 44 geeignet beeinflusst werden, und zudem kann die Menge des in diesem Anwendungsfall als "Abfallprodukt" anfallenden Katholyts besonders gering gehalten werden.

Zur Überprüfung der Materialeigenschaften des hergestellten Anolyten sowie zur Mengenmessung sind im Übrigen in die Abströmleitung 24 eine Anzahl von Sensoren, insbesondere ein Mengensensor 66, ein Temperatursensor 68, ein pH-Sensor 70 sowie ein Sensor 72 zur Messung des Redox-Potentials, geschaltet.

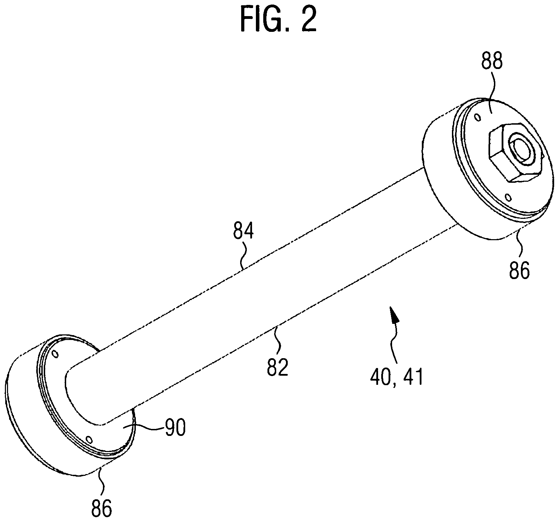

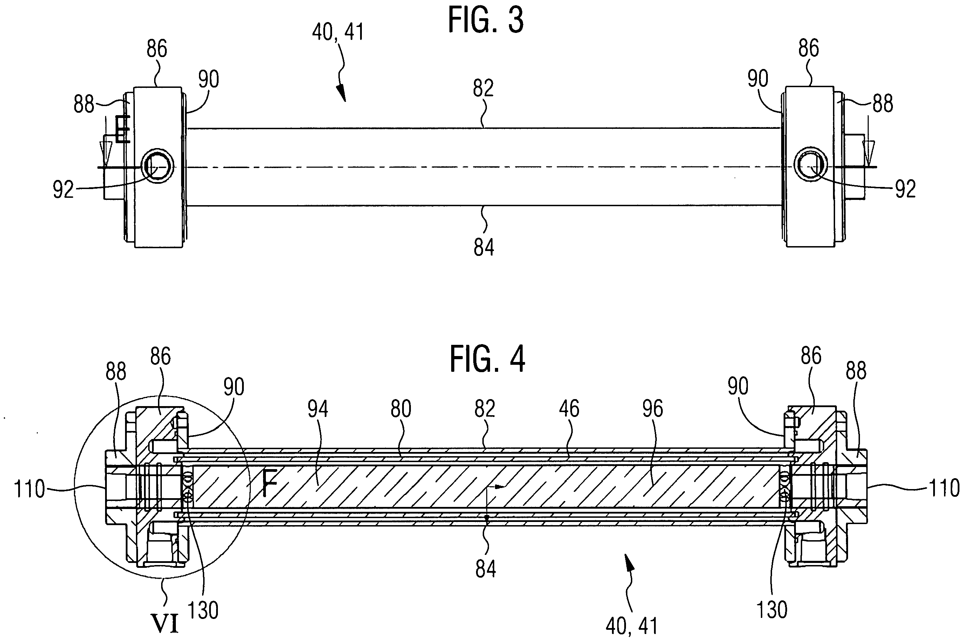

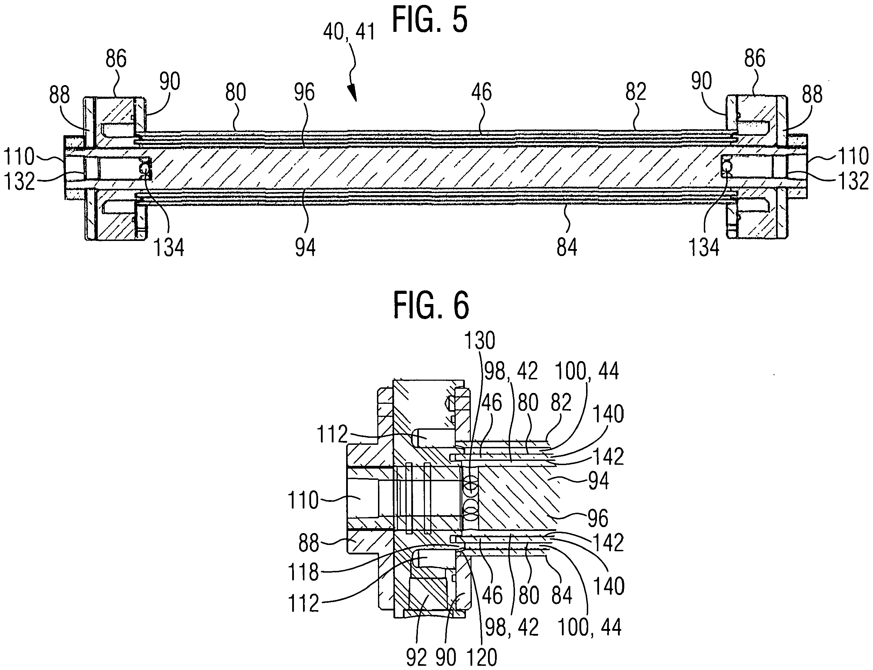

In konstruktiver Hinsicht sind die Elektrolysezellen 40, 41, wie dies in perspektivischer Ansicht in FIG. 2, in Draufsicht in FIG. 3 und im Längsschnitt in FIG. 4, 5 gezeigt ist, in im Wesentlichen zylindrischer Grundform und somit in röhren- oder stabförmiger Bauweise ausgeführt. Dabei ist als Membran 46 ein Keramik-Hohlzylinder 80 vorgesehen, der außenseitig von einem ebenfalls als Hohlzylinder 82 ausgeführten Außengehäuse 84 umgeben ist. Das Außengehäuse 84 ist dabei zusätzlich als Elektrode für die Elektrolysezelle 40, 41 vorgesehen und dementsprechend aus Metall, im Ausführungsbeispiel aus Titan, ausgeführt. Endseitig sind der die Membran 46 bildende Keramik-Hohlzylinder 80 und das diesen umgebende Außengehäuse 84 jeweils in einer Abschlusskappe 86 gelagert, die ihrerseits über metallische Endplatten 88 an endseitigen Stirnplatten 90 des Außengehäuses 84 montiert ist. Wie insbesondere der Draufsicht in FIG. 3 entnehmbar ist, sind die Medienanschlüsse 92 der Elektrolysezelle 40, 41 ausschließlich im Bereich der Abschlusskappen 86 vorgesehen.

Aus der Darstellung der Elektrolysezelle 40, 41 im Längsschnitt gemäß den FIG. 4, 5 wird deutlich, dass der das Außengehäuse 84 bildende metallische Hohlzylinder 82 konzentrisch zum die Membran 46 bildenden Keramik-Hohlzylinder 80 angeordnet ist. Zudem ist, ebenfalls konzentrisch zum die Membran 46 bildenden Keramik-Hohlzylinder 80, innerhalb der Membran 46 eine ihrerseits ebenfalls als Hohlzylinder 94 ausgeführte metallische Zentralelektrode 96 angeordnet, die zusätzlich zum Außengehäuse 84 als zweite Elektrode der Elektrolysezelle 40, 41 dient.

In dieser rohr- oder stabförmigen Ausgestaltung der Elektrolysezelle 40, 41 werden die vom Elektrolyten durchströmten Elektrodenräume somit einerseits vom durch den Zwischenraum zwischen der Zentralelektrode 96 und der Membran 46 gebildeten ersten Ringraum 98 und andererseits vom durch den Zwischenraum zwischen der Membran 46 und dem Außengehäuse 84 gebildeten zweiten Ringraum 100 gebildet. Hinsichtlich der elektrischen Schaltung kann die Elektrolysezelle 40, 41 dabei in der Art einer "herkömmlichen" Ausgestaltung derart aufgebaut sein, dass der innere, erste Ringraum 98 als Anodenraum 44 und der äußere, zweite Ringraum 100 als Kathodenraum 42 vorgesehen ist. Im Ausführungsbeispiel ist aber für eine besonders weit gehende Homogenisierung des Strömungsprofils des Elektrolyten und eine günstige Medienstromführung insbesondere im Hinblick auf die erreichbaren Durchsätze der innere, erste Ringraum 98 als Kathodenraum 42 und der äußere, zweite Ringraum 100 als Anodenraum 44 ausgestaltet.

Dementsprechend dient die Zentralelektrode 96 als Kathode, wohingegen das Außengehäuse 84 als Anode vorgesehen ist. Dementsprechend ist auch die Materialwahl für diese genannten Komponenten vorgesehen. Die als Kathode vorgesehene Zentratelektrode 96 ist dabei als metallischer Grundkörper, insbesondere aus Titan, aufgebaut und vorzugsweise mit einer die Funktionalität besonders begünstigenden Oberflächenbeschichtung, im Ausführungsbeispiel eine Beschichtung aus Gold (Au) mit einer Dicke von etwa 1 µm, versehen. Das als Anode vorgesehene Außengehäuse 84 ist ebenfalls von einem Grundkörper aus Titan gebildet, der an seiner dem Anodenraum 44 oder dem zweiten Ringraum 100 zugewandten Innenoberfläche des Hohlzylinders 82 eine geeignet gewählten Oberflächenbeschichtung 102, insbesondere umfassend Iridium (Ir), Ruthenium (Ru), Gold (Au) und/oder Diamant, aufweist.

Die Elektrolysezelle 40, 41 ist in besonderem Maße für die Herstellung von besonders hochwertiger elektrochemisch aktivierter Kochsalzlösung ausgelegt, wobei insbesondere ein besonders hoher Gehalt an freiem Chlor und/oder ein hohes Redox-Potential bei insgesamt besonders hoher Lagerbeständigkeit angestrebt wird. Um dies zu ermöglichen, ist die Elektrolysezelle 40, 41 hinsichtlich ihres konstruktiven Aufbaus für eine besonders gleichmäßige und homogene Medienstromführung bei der Durchströmung des Elektrolyten durch die Elektrodenräume ausgelegt, wobei insbesondere Störeffekte auf Grund von Verwirbelungen, Gasbläschenbildungen und dergleichen besonders gering gehalten werden sollen.

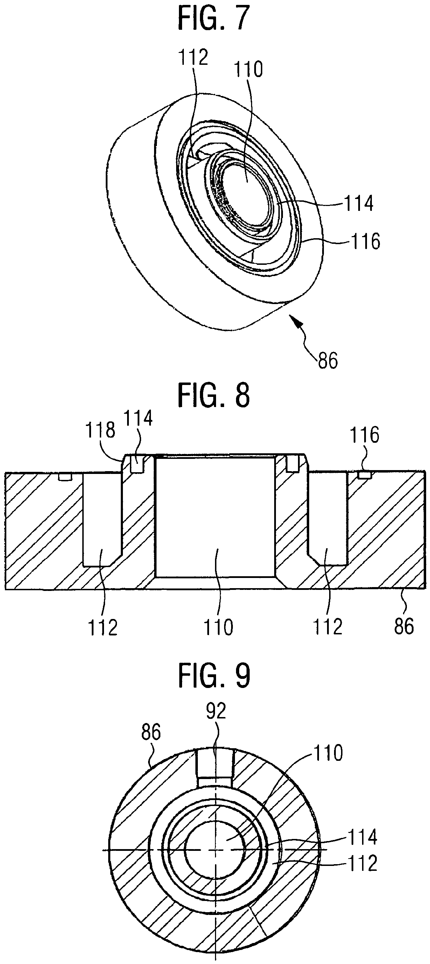

Hierzu ist die jeweils endseitig an den Grundkörpern der genannten Komponenten angeordnete Abschlusskappe 86, die in FIG. 7 in perspektivischer Darstellung und in den FIG. 8, 9 im Längs- bzw. Querschnitt dargestellt ist, geeignet ausgeführt. insbesondere liegt bei der Ausgestaltung der Abschlusskappe 86 der Gedanke zu Grunde, dass die durch die Ein- und Ausspeisung des Elektrolyten aus den Elektrodenräumen auftretenden Verwirbelungseffekte konsequent aus den eigentlichen Elektrodenräumen herausverlagert werden sollten. Dazu weist die Abschlusskappe 86 eine Zentralbohrung 110 auf, über die der Elektrolyt in den Innenraum des die Zentralelektrode 96 bildenden Hohlzylinders 94 eingespeist werden kann. Gerade um aber auch den die Membran 46 außen umgebenden, als Anodenraum 44 vorgesehenen zweiten Ringraum 100 besonders homogen und verwirbetungsfrei mit Medium bespeisen zu können, weist die Abschlusskappe 86 einen die den Zutrittskanal zum Innenraum der Zentralelektrode 96 bildende Zentralbohrung 110 umlaufenden Ringraum 112 auf, der die Funktion einer Sammelkammer oder Verteilerkammer wahmehmen kann. In den Ringraum 112 mündet der jeweilige Medienanschluss 92.

Wie insbesondere der Darstellung im Längsschnitt gemäß FIG. 8 und der Darstellung im Querschnitt bis FIG. 9 besonders deutlich entnehmbar ist, weist die Abschlusskappe 86 zudem eine erste, zur Aufnahme des die Membran 46 bildenden Hohlzylinders 80 vorgesehene Ringnut 114 und eine zweite, zur Aufnahme eines Dichtungsrings vorgesehene Ringnut 116 auf. Im Bereich zwischen dem Ringraum 112 und der ersten Ringnut 114 weist die Abschlusskappe 86 eine abgeschrägte Flanke 118 auf. Diese korrespondiert mit einer zugeordneten Flanke 120 im Flanschbereich des Außengehäuses 84. Die Abschlusskappe 86 und das Außengehäuse 84 sind dabei derart dimensioniert und konstruiert, dass die Flanken 118, 120 im montierten Zustand einen umlaufenden Ringspalt bilden, über den der Ringraum 112 medienseitig mit dem den Anodenraum 44 bildenden zweiten Ringraum 100 zwischen Membran 46 und Außengehäuse 84 verbunden ist.

Durch diese konstruktive Auslegung entsteht eine rotationssymmetrische und somit besonders homogenisierte medienseitige Verbindung des Ringraums 112 in der Abschlußkappe 86 mit dem den Anodenraum 44 bildenden Ringraum 100 innerhalb des Außengehäuses 84. Der Ringraum 112 in der Abschlusskappe 86 dient somit als Sammel- und Verteilerkammer, wobei die Medieneinspeisung von extern über die Medienanschlüsse 92 zunächst in den Ringraum 112 erfolgt. Von dort erfolgt eine Homogenisierung des eingespeisten Mediums, und sämtliche Verwirbelungen finden im Ringraum 112 statt. Von dort aus kann das Medium anschließend homogenisiert und ohne weitere Störeinflüsse über den durch die Flanken 118, 120 gebildeten Ringspalt in die Anodenkammer 44 einströmen.

In einer Variante ist die Elektrolysezelle 40,41 für eine Drallerzeugung im den ringförmig ausgestalteten Anodenraum 44 durchströmenden Medium und gegebenenfalls auch im den Kathodenraum 42 durchströmenden Medium vorgesehen. Hierdurch wird erreicht, dass das die Elektrodenräume durchströmende Medium bedingt durch die auftretenden Zentrifugalkräfte zusätzlich an die Außenwand des jeweiligen Elektrodenraums, also für den Kathodenraum 42 an die Innenwand der Membran 42 bzw. für den Anodenraum 44 an die Innenwand des Außengehäuses 84, angepresst wird. Damit entsteht ein besonders inniger Kontakt des Mediums an der jeweiligen Wand, so dass die diesbezüglichen Transportprozesse zusätzlich unterstützt werden. Zur Erzeugung des Dralls bei der Einspeisung des Mediums in den als Anodenraum 44 vorgesehenen äußeren Ringraum 100 kann dabei der von den Flanken 118, 120 im montierten Zustand gebildete umlaufende Ringspalt geeignet ausgeführt, insbesondere konturiert, sein, und/oder es können geeignete Mittel zur Drallerzeugung wie beispielsweise Leitflossen, Leitbleche oder dergleichen im Einströmbereich des Mediums, also insbesondere im Bereich des Ringspalts, vorgesehen sein.

Gegebenenfalls können auch noch weitere geeignete Mittel zur Drallerzeugung im die Elektrodenkammern durchströmenden Medium vorgesehen sein, beispielsweise eine Innenberippung des jeweiligen Hohlzylinders 80, 82, 94 in der Bauweise eines "gezogenen Rohres" oder eine Riffelung an der Innenoberfläche.

Die Abschlusskappen 86 sind einerseits, gerade durch den genannten umlaufenden Ringraum 112, zur Homogenisierung, Sammlung und Vorverteilung der Strömungsmedien vorgesehen. Andererseits sind die Abschlusskappen 86 aber auch Trägerelemente und zudem als Isolationselemente vorgesehen, über die eine ordnungsgemäße Positionierung der Komponenten, also insbesondere der Zentralelektrode 96, der Membran 46 und des Außengehäuses 84, relativ zueinander zur Bildung einer insgesamt konzentrischen Anordnung und eine gleichzeitige zuverlässige elektrische Isolierung dieser Komponenten voneinander erfolgen kann. Dazu sind die Abschlusskappen 86 aus Kunststoff, nämlich im Ausführungsbeispiel aus PTFE, gefertigt, so dass die gewünschte Isolatorwirkurig sichergestellt ist.

Über die Zentralbohrung 110 wird der Innenraum der Zentralelektrode 96 mit Medium bespeist. Damit der Elektrolyt in diesem Innenbereich des die Zentralelektrode 96 bildenden Hohlzylinders 94 in den diesen umgebenden, den Kathodenraum 42 bildenden ersten Ringraum 98 gelangen kann, ist die Zentralelektrode 96 in ihren Endbereichen mit einer Anzahl von Überströmöffnungen 130 versehen. Diese stellen eine medienseitige Verbindung des Innenraums des Hohlzylinders 94 mit seinem Außenraum, also mit dem ersten Ringraum 98, her. Die Überströmöffnungen 130 sind dabei in Längsrichtung der Elektrolysezelle 40, 41 gesehen derart positioniert, dass sich möglichst eine gleiche "wirksame Länge" für den Kathodenraum 42 einerseits und den Anodenraum 44 andererseits gibt. Dazu sind die Überströmöffnungen 130 derart ausschließlich im Endbereich des die Zentralelektrode 96 bildenden Hohlzylinders 94 positioniert, dass sie im Wesentlichen in der die Stirnplatte 90 des Außengehäuses 84 definierten Ebene liegen. Insbesondere sind die Überströmöffnungen 130 dabei derart positioniert, dass sie maximal etwa 5 mm versetzt zur Stirnfläche der jeweiligen Stirnplatte 90 angeordnet sind.

Zur kontrollierten Medieneinspeisung in den Innenraum der Zentralelektrode 96 ist in der Zentralbohrung 110 jeweils ein Ein- bzw. Ausströmelement 132 angeordnet, das in der Art einer Führungshülse in die jeweilige Zentralbohrung 110 hineinragt und endseitig mit Überströmöffnungen 134 für den Elektrolyten versehen ist. Um auch hier eine besonders homogene Medienein- und Ausspeisung zu gewährleisten, sind die Überströmöffnungen 134 dabei in Längsrichtung der Elektrolysezelle 40, 41 gesehen in der im Wesentlichen gleichen Position angeordnet wie die Überströmöffnungen 130 der Zentralelektrode 96. Die Überströmöffnungen 134 können dabei mit ihrer Haupt-Durchströmungsrichtung im Wesentlichen radial ausgerichtet sein. Im Ausführungsbeispiel ist das System aber für eine Drallerzeugung im in den Innenraum der Zentralelektrode 96 einströmenden Medium vorgesehen Hierdurch wird erreicht, dass das den Innenraum der Zentralelektrode 96 durchströmende Medium bedingt durch die auftretenden Zentrifugalkräfte zusätzlich an die Innenwand der Zentralelektrode 96 angepresst wird. Hierzu sind die Überströmöffnungen 134 mit ihrer Haupt-Durchströmungsrichtung geneigt ausgerichtet, weisen also zusätzlich zu einer radialen Richtungskomponente auch noch eine tangentiale Richtungskomponente auf.

Wie insbesondere der ausschnittsweise vergrößerten Darstellung in FIG. 6 entnehmbar ist, ist zudem der die Membran 46 bildende Keramik-Hohlzylinder 80 hinsichtlich seiner Materialwahl und seiner Materialeigenschaften in besonderem Maße auf die ablaufenden Elektrolysevorgänge ausgerichtet. Der die Membran 46 bildende Keramik-Hohlzylinder 80 ist dazu von seiner Bauweise her geeignet ausgeführt und weist insbesondere einen Trägerkörper 140 aus poröser Keramik (im Ausführungsbeispiel α - Al₂O₃) mit einer mittleren Porengröße von mindestens 100 nm (im Ausführungsbeispiel etwa 3 µm) auf. Durch diese Wahl der Porosität ist insbesondere ein insgesamt vergleichsweise leichter Ionentransport mit geeignet hoher Ionendurchlässigkeit bei auch für Langzeitgebrauch ausreichend hoher mechanischer Stabilität des Trägerkörpers 140 ermöglicht. Um dabei aber gezielt die einsatzbedingt erwünschten Ionenwanderungsprozesse zu begünstigen und Nebeneffekte und Störprozesse zu minimieren, weist der Trägerkörper 140 an seiner Innenoberfläche eine als Definitionsschicht dienende Beschichtung 142 mit einer offenen Porosität von etwa 40 bis 55 % auf. Die Beschichtung 142 ist dabei im Vergleich zum vergleichsweise großporigen Trägerkörper 140 vergleichsweise kleinporig ausgeführt und weist eine mittlere Porengröße zwischen 0,2 nm (200 pm) und 150 nm (im Ausführungsbeispiel etwa 100 nm) auf. Die als Definitionsschicht dienende Beschichtung 142 könnte dabei beispielsweise aus Titandioxid (TiO₂) mit einer Porengröße von etwa 5 bis 10 nm gebildet sein. Im Ausführungsbeispiel ist als Material dafür α - Al₂O₃ mit einer Porengröße von etwa 100 nm vorgesehen.

### Bezugszeichenliste

- 1: Anlage
- 2: Elektrolysemodul
- 4: Versorgungsleitung / Zuströmleitung
- 6: Wasserenthärterstation
- 8: Venturidüse
- 10: Solebehälter
- 12: Ablaufleitung
- 24: Abströmleitung
- 26: Vorratsbehälter
- 28: Multiwegeventil
- 30: Abflussleitung
- 40, 41: Elektrolysezelle
- 42: Kathodenraum
- 44: Anodenraum
- 46: Membran
- 47: Entgasungsleitung
- 50: Zuleitung
- 52: Abströmleitung
- 54: Sammelpunkt
- 58: Überströmleitung
- 60: Abführleitung
- 62: Drosselventil
- 64: Auffangbehälter
- 66: Mengensensor
- 68: Temperatursensor
- 70: ph-Sensor
- 72: Sensor
- 80: Keramik-Hohlzylinder
- 82: Hohlzylinder
- 84: Außengehäuse
- 86: Abschlusskappe
- 90: Stirnplatte
- 92: Medienanschluss
- 94: Hohlzylinder
- 96: Zentralefektrode
- 98: erster Ringraum
- 100: zweiter Ringraum
- 102: Oberflächenbeschichtung
- 110: Zentralbohrung
- 112: Ringraum
- 114: Ringnut
- 116: Ringnut
- 118, 120: Flanken
- 130: Überströmöffnungen
- 132: Ein-/Ausströmelement
- 134: Überströmöffnung
- 140: Trägerkörper
- 142: Beschichtung

## Patentansprüche

1. Elektrolysezelle (40, 41), insbesondere zur Erzeugung einer elektrochemisch aktivierten Kochsalzlösung, mit einem mit einer Anode versehenen Anodenraum (44) und mit einem von diesem durch eine Membran (46) getrennten, mit einer Kathode versehenen Kathodenraum (42), wobei die Membran (46) als von einem Außengehäuse (84) umgebener Keramik-Hohlzylinder (80) ausgeführt ist, **dadurch gekennzeichnet, dass** der die Membran (46) bildende Keramik-Hohlzylinder (80) und das diesen umgebende Außengehäuse (84) endseitig jeweils in einer Abschlusskappe (86) gelagert sind, die eine einen Zutrittskanal zum Innenraum des die Membran (46) bildenden Keramik-Hohlzylinders (80) bildende Zentralbohrung (110) und einen diese umlaufenden, medienseitig mit dem Zwischenraum zwischen Membran (46) und Außengehäuse (84) verbundenen Ringraum (112) aufweist.

2. Elektrolysezelle (40, 41) nach Anspruch 1, deren die Membran (46) umgebendes Außengehäuse (84) als Hohlzylinder (82), vorzugsweise gebildet aus Metall, ausgeführt ist, der bevorzugt konzentrisch zur Membran (46) angeordnet ist.

3. Elektrolysezelle (40, 41) nach Anspruch 1 oder 2, bei der innerhalb des die Membran (46) bildenden Hohlzylinders (80) eine als Hohlzylinder (94) ausgeführte metallische Zentralelektrode (96) angeordnet ist, deren Innenraum über eine Anzahl von Überströmöffnungen (130) medienseitig mit dem sie außenseitig umgebenden, von der Innenseite der Membran (46) begrenzten Ringraum (98) verbunden ist.

4. Elektrolysezelle (40, 41) nach Anspruch 3, deren Zentratelektrode (96) konzentrisch zur Membran (46) angeordnet ist.

5. Elektrolysezelle (40, 41) nach Anspruch 3 oder 4, bei der die Überströmöffnungen (130) ausschließlich in den Endbereichen der Zentralelektrode (96) positioniert sind.

6. Elektrolysezelle (40, 41) nach einem der Ansprüche 3 bis 5, deren Zentralelektrode (96) endseitig jeweils mit einem in ihren innenraum hineinragenden, eine Anzahl von Überströmöffnungen (134) aufweisenden Ein-/Ausströmelement (132) versehen ist, wobei die Überströmöffnungen (134) der Ein-/Ausströmelemente (132) in Längsrichtung der Membran (46) gesehen an gleicher Position angeordnet sind wie die Überströmöffnungen (130) der Zentralelektrode.

7. Elektrolysezelle (40, 41) nach Anspruch 6, bei der die Überströmöffnungen (134) der Ein-/Ausströmelemente (132) in radialer Richtung gesehen geneigt angeordnet sind.

8. Elektrolysezelle (40, 41) nach einem der Ansprüche 1 bis 7, deren Abschlusskappen (86) aus Isolatormaterial, bevorzugt aus einem Kunststoff, vorzugsweise basierend auf PP, PE oder insbesondere bevorzugt aus PTFE, gefertigt sind.

9. Elektrolysezelle (40, 41) nach einem der Ansprüche 1 bis 8, bei der die Zentralelektrode (96) als Kathode und das die Membran (46) umgebende Außengehäuse (84) als Anode vorgesehen ist.

10. Elektrolysezelle (40, 41) nach einem der Ansprüche 1 bis 9, deren Anode eine Oberflächenbeschichtung (102), vorzugsweise umfassend Platin, Iridium, Ruthenium, Gold und/oder Diamant, aufweist.

11. Elektrolysezelle (40, 41) nach einem der Ansprüche 1 bis 10, deren Kathode eine Oberflächenbeschichtung, vorzugsweise umfassen Gold, besonders bevorzugt mit einer Schichtdicke von etwa 1 µm, aufweist.

12. Elektrolysezelle (40, 41) nach einem der Ansprüche 1 bis 11. deren die Membran (46) bildender Hohlzylinder (80) einen Trägerkörper (140) aus poröser Keramik mit einer mittleren Porengröße von mindestens 100 nm aufweist, der auf mindestens einer seiner Oberflächen mit einer porösen Definitionsbeschichtung mit einer mittleren Porengröße von höchstens 10 nm versehen ist.

13. Elektrolysezelle (40, 41) nach Anspruch 12, bei der die Definitionsbeschichtung eine mittlere Porengröße von mindestens 0,2 nm aufweist.

14. Anlage (1) zur Erzeugung einer elektrochemisch aktivierten Kochsalzlösung auf Wasserbasis mit einem Elektrolysemodul (2), das eine Mehrzahl von Elektrolysezellen (40, 41) nach einem der Ansprüche 1 bis 13 umfasst, wobei die Anodenräume (44) der Elektrolysezellen (40, 41) medienseitig in Reihe und die Kathodenräume (42) der Elektrolysezellen (40, 41) medienseitig parallel geschaltet sind.

15. Anlage (1) nach Anspruch 14, bei der die Anoden der Elektrolysezellen (40, 41) jeweils mit einer Oberflächenbeschichtung (102) versehen sind, wobei Material und Zusammensetzung der jeweiligen Oberflächenbeschichtung abhängig von der Position der jeweiligen Anode in der Serienschaltung der Anodenräume (44) gewählt sind.
